# EUROPÄISCHE PATENTSCHRIFT

(11) **EP 3 403 850 B1**
(45) Veröffentlichungstag und Bekanntmachung des Hinweises auf die Patenterteilung: **30.03.2022**
(21) Anmeldenummer: 18170709.2
(22) Anmeldetag: 03.05.2018
(51) Int. Cl.: B60B 33/06

(54) **MÖBELROLLE**
CASTOR FOR FURNITURE
ROULETTE POUR MEUBLES

(30) Priorität: 08.05.2017 DE 202017102716 U
(43) Veröffentlichungstag der Anmeldung: 21.11.2018
(73) Patentinhaber: Wagner System GmbH, 77933 Lahr (DE)
(72) Erfinder: Wagner, Roland, 77933 Lahr (DE)
(74) Vertreter: Westphal, Mussgnug & Partner Patentanwälte mbB

(56) Entgegenhaltungen:
- DE-U1- 29 608 502
- US-A- 2 613 389
- US-A- 5 001 808

## Beschreibung

Die Erfindung betrifft eine Möbelrolle gemäß dem Oberbegriff des Anspruchs 1.

Bekannt sind Möbelrollen mit einem Befestigungsgehäuse zur Befestigung an der Unterseite eines Möbelstücks und einem auf einer Achse drehbar gelagerten Rad, wobei die Achse zwischen einer ersten und einer zweiten Position relativ zu dem Befestigungsgehäuse verschiebbar angeordnet ist. Dabei ist das Rad in der ersten Position innerhalb des Befestigungsgehäuses angeordnet und ragt in der zweiten Position abschnittsweise durch eine Öffnung aus dem Befestigungsgehäuse heraus. Die Achse ist mittels eines Federelements beaufschlagt aus der ersten Position in die zweite Position überführbar. Derartige Möbelrollen ermöglichen es, Gegenstände mit Hilfe der Räder einfach von einem Ort zum anderen Ort bewegen zu können und den entsprechenden Gegenstand an einem gewünschten Ort zu platzieren. An dem gewünschten Ort kann die Rollfunktion dadurch ausgeschaltet werden, dass das Rad in die erste Position überführt wird. Dies kann beispielsweise durch zusätzliche Belastung des Möbelstücks erfolgen, wie es beispielsweise bei den als Elefantenfuß bezeichneten Tritthockern bekannt ist.

Aus US 5 001 808 ist eine Möbelrolle bekannt, die in einer ersten Position innerhalb eines Befestigungsgehäuses angeordnet ist und in einer zweiten Position abschnittsweise aus dem Befestigungsgehäuse herausragt.

Die Aufgabe der Erfindung besteht darin, eine zwischen zwei Positionen verstellbare Möbelrolle weiterzubilden, insbesondere derart, dass eine Möglichkeit besteht, das Rad bei der üblichen Benutzung des Möbelstücks in der ersten Position und somit versenkt anzuordnen.

Die Aufgabe wird erfindungsgemäß gelöst durch eine Möbelrolle mit den Merkmalen des Anspruchs 1.

Vorteilhafte Ausgestaltungen und Weiterbildungen sind in den abhängigen Ansprüchen angegeben.

Die erfindungsgemäße Möbelrolle mit einem Befestigungsgehäuse zur Befestigung an der Unterseite eines Möbelstücks und einem auf einer Achse drehbar gelagerten Rad, wobei die Achse zwischen einer ersten und einer zweiten Position relativ zu dem Befestigungsgehäuse verschiebbar angeordnet ist, wobei das Rad in der ersten Position vollständig innerhalb des Befestigungsgehäuses angeordnet ist und in der zweiten Position abschnittsweise durch eine Öffnung aus dem Befestigungsgehäuse herausragt, wobei die Achse mittels eines Federelements beaufschlagt aus der ersten Position in die zweite Position überführbar ist, zeichnet sich dadurch aus, dass die Achse in der zweiten Position mittels einer Rastvorrichtung fixierbar ist. Eine derartige Rastvorrichtung, welche die Achse in der zweiten Position fixiert, ermöglicht es, das Rad in der zweiten Position, in welcher es abschnittsweise durch eine Öffnung aus dem Befestigungsgehäuse herausragt, zu fixieren, um das Möbelstück mit Hilfe der Räder verschieben zu können, andererseits jedoch bei Erreichen des gewünschten Orts das Rad wieder in die erste Position zu überführen, um das Rad in dem Befestigungsgehäuse zu versenken, sodass das Rad in der üblichen Benutzungsposition von außen nicht sichtbar ist.

Vorzugsweise kann die Kraft des Federelements in Abhängigkeit von der Gewichtskraft des Möbelstücks derart dimensioniert werden, dass die Achse, wenn sie in der ersten Position angeordnet ist, bei Belastung durch das Möbelstück in der ersten Position verbleibt. Dadurch bleibt das Rad in der versenkten Position, wenn das entsprechende Möbelstück an den gewünschten Platz gestellt ist. Die Kraft des Federelements ist dabei insbesondere derart dimensioniert, dass sie nicht ausreicht, um das Möbelstück anzuheben.

Eine besonders bevorzugte Ausführungsform der Erfindung sieht vor, dass die Kraft des Federelements in Abhängigkeit von der Gewichtskraft des Möbelstücks derart dimensioniert werden kann, dass die Achse bei Entlastung, d. h. insbesondere bei Anheben des Möbelstücks, aus der ersten Position in die zweite Position überführt wird. Soll das Möbelstück somit verrückt werden, genügt ein Anheben des Möbelstücks, um die Achse und damit das Rad aus der ersten Position in die zweite Position zu überführen, sodass das Rad abschnittsweise aus dem Befestigungsgehäuse herausragt und das Möbelstück mit Hilfe des Rads einfach von einem Ort zum anderen bewegt werden kann, da die Achse in der zweiten Position mittels der Rastvorrichtung fixierbar ist.

Die Rastvorrichtung ist vorzugsweise derart ausgebildet, dass die Achse, wenn sie in der zweiten Position angeordnet ist, sowohl bei unbelastetem Befestigungsgehäuse als auch bei durch das Möbelstück belastetem Befestigungsgehäuse in der zweiten Position gehalten ist. Dadurch wird ermöglicht, das Möbelstück mit Hilfe der Räder von einem Ort zum anderen zu bewegen. Vorteilhafterweise ist die Rastvorrichtung derart ausgebildet, dass sie bei Belastung des Befestigungsgehäuses durch die Gewichtskraft des Möbelstücks und eine zusätzliche Kraft lösbar ist. Ist das Möbelstück an der gewünschten Stelle angekommen, genügt es somit, das Möbelstück durch eine zusätzliche Kraft gegen die Kraft des Federelements und der Rastvorrichtung zu belasten, um die Rastvorrichtung zu lösen und damit die Achse aus der zweiten Position wieder in die erste Position zu überführen.

Erfindungsgemäß weist die Rastvorrichtung einen Arretierungsring auf. Dadurch wird ermöglicht, die Rastvorrichtung möglichst platzsparend auszugestalten.

Besonders bevorzugt ist der Arretierungsring in Abhängigkeit von der Gewichtskraft des Möbelstücks derart dimensioniert, dass die Achse, wenn sie in der zweiten Position angeordnet ist, sowohl bei unbelastetem Befestigungsgehäuse als auch bei durch das Möbelstück belastetem Befestigungsgehäuse in der zweiten Position gehalten ist und die Achse bei Belastung des Befestigungsgehäuses durch die Gewichtskraft des Möbelstücks und eine zusätzliche Kraft aus der zweiten Position in die erste Position überführbar ist.

Vorzugsweise ist das Federelement als Schraubenfeder ausgebildet. Schraubenfedern können auf einfache Art und Weise mit verschiedenen Federkonstanten und Federkräften ausgebildet werden, sodass eine Abstimmung der Kraft des Federelements auf ein vorgegebenes Gewicht eines Möbelstücks auf einfache Art und Weise möglich ist.

Eine bevorzugte Ausführungsform der Erfindung sieht vor, dass die Achse in einem Lagergehäuse gelagert ist und das Lagergehäuse in dem Befestigungsgehäuse zwischen zwei Positionen verstellbar angeordnet ist. Die Anordnung der Achse in einem Lagergehäuse ermöglicht auf einfache Art und Weise eine Anordnung des Rads derart, dass das Rad um die Achse frei schwenkbar ist.

An dem Lagergehäuse ist vorzugsweise ein Führungselement angeordnet, welches in einer Ausnehmung des Befestigungsgehäuses eingreift und in dieser verschiebbar angeordnet ist. Ein derartiges Führungselement ermöglicht die Verschiebbarkeit zwischen der ersten und der zweiten Position auf einfache Art und Weise.

Besonders bevorzugt weist das Führungselement eine Nut auf, in welcher der Arretierungsring angeordnet ist. Eine derartige Ausgestaltung ermöglicht eine besonders platzsparende Ausgestaltung der Rastvorrichtung.

Vorteilhafterweise weist die Ausnehmung eine Nut auf, wodurch die Rastvorrichtung besonders platzsparend ausgebildet werden kann.

Gemäß einer vorteilhaften Weiterbildung der Erfindung weist das Befestigungsgehäuse auf einer Innenseite einen Haltevorsprung oder eine Haltekante auf, durch welche auf einfache Art und Weise ein Herausfallen des Lagergehäuses aus dem Befestigungsgehäuse verhindert werden kann.

Bevorzugt ist eine Verdrehsicherung zwischen dem Lagergehäuse und dem Befestigungsgehäuse angeordnet, um eine gewünschte Ausrichtung des Rads beibehalten zu können. Die Verdrehsicherung kann beispielsweise als an einem von Lagergehäuse und Befestigungsgehäuse angeordneter Vorsprung ausgebildet sein, welcher in eine an dem anderen von Lagergehäuse und Befestigungsgehäuse angeordnete Ausnehmung eingreift.

Bei einer bevorzugten Ausführungsform der Erfindung sind das Federelement und die Rastvorrichtung derart dimensioniert und untereinander und auf das Gewicht des Möbelstücks abgestimmt, dass die Achse, wenn sie in der ersten Position angeordnet ist und das Möbelstück abgestellt ist und somit das Befestigungsgehäuse belastet, in der ersten Position verbleibt, dass die Achse, wenn das Möbelstück angehoben wird und somit das Befestigungsgehäuse entlastet wird, aus der ersten Position mittels des Federelements beaufschlagt in die zweite Position überführt wird, in welcher sie mittels der Rastvorrichtung fixiert wird, dass die Achse, wenn sie in der zweiten Position angeordnet ist und das Möbelstück abgestellt ist und somit das Befestigungsgehäuse belastet, in der zweiten Position verbleibt, und dass die Achse, wenn sie in der zweiten Position angeordnet ist und das Möbelstück abgestellt und durch eine zusätzliche Kraft belastet wird, somit das Befestigungsgehäuse durch die Gewichtskraft des Möbelstücks und eine zusätzliche Kraft belastet ist, aus der zweiten Position wieder in die erste Position überführt wird, da dadurch die Rastvorrichtung wieder gelöst wird.

Die erfindungsgemäße Möbelrolle kommt vorzugsweise bei einem Tisch mit zwei relativ zueinander verschiebbaren Teilelementen zur Anwendung. Dazu ist an einem Tisch mit wenigstens zwei relativ zueinander verschiebbaren Teilelementen an wenigstens einem der Teilelemente wenigstens eine erfindungsgemäße Möbelrolle angeordnet. Eine derart angeordnete Möbelrolle vereinfacht das Ausziehen des Tisches erheblich.

Ein Ausführungsbeispiel der Erfindung wird anhand der nachfolgenden Figuren ausführlich erläutert. Es zeigen
- Fig. 1: eine Explosionsdarstellung eines Ausführungsbeispiels einer erfindungsgemäßen Möbelrolle,
- Fig. 2: einen Längsschnitt durch die zusammengebaute Möbelrolle gemäß Figur 1 mit dem Rad in einer ersten Position,
- Fig. 3: einen Längsschnitt durch die zusammengebaute Möbelrolle gemäß Figur 1 mit dem Rad in einer zweiten Position,
- Fig. 4: einen weiteren Längsschnitt durch die zusammengebaute Möbelrolle gemäß Figur 1 mit dem Rad in der zweiten Position,
- Fig. 5: einen weiteren Längsschnitt durch die zusammengebaute Möbelrolle gemäß Figur 1 mit dem Rad in der ersten Position,
- Fig. 6: eine perspektivische Ansicht der zusammengebauten Möbelrolle gemäß Figur 1 mit dem Rad in der zweiten Position,
- Fig. 7: eine perspektivische Ansicht der zusammengebauten Möbelrolle gemäß Figur 1 mit dem Rad in der ersten Position und

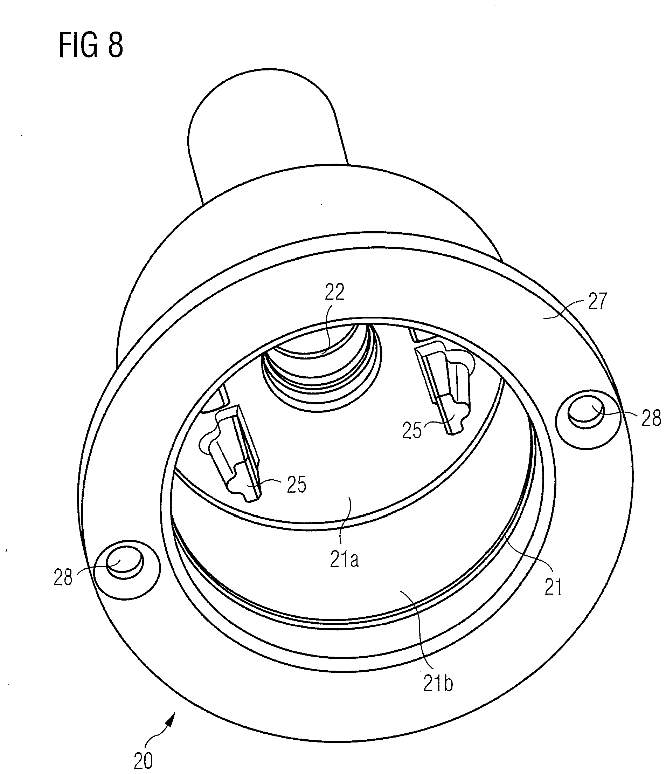

- Fig. 8: eine perspektivische Ansicht des Befestigungsgehäuses der Möbelrolle gemäß Figur 1.

Die Figuren zeigen verschiedene Ansichten eines Ausführungsbeispiels einer Möbelrolle 10 mit einem Befestigungsgehäuse 20 zur Befestigung an einer Unterseite eines Möbelstücks und einem auf einer Achse 35 drehbar gelagerten Rad 37.

Das Befestigungsgehäuse 20 kann ein topfförmiges Aufnahmeelement 21 mit einem Boden 21a und einer im Wesentlichen zylindrischen Wandung 21b sowie einer dem Boden 21a gegenüberliegenden Öffnung 21c aufweisen. An dem offenen Ende der Wandung 21b kann ein umlaufender Bund 27 angeordnet sein, in welchem ein oder mehrere Löcher 28 angeordnet sein können. Das Befestigungsgehäuse 20 kann derart an einem Möbelstück befestigt werden, dass es in eine an der Unterseite des Möbelstücks angeordnete Ausnehmung eingesetzt wird, bis der Bund 27 an der Unterseite des Möbelstücks anschlägt. Die Fixierung des Befestigungsgehäuses 20 an dem Möbelstück kann dadurch erfolgen, dass durch die Löcher 28 Schrauben in die Unterseite des Möbelstücks eingedreht werden. Ein derartiges Befestigungsgehäuse 20 kann insbesondere auch in die Standfläche von Tischbeinen eingesetzt werden.

In das Aufnahmeelement 21 ist in einer Ausführungsform ein Lagergehäuse 30 eingesetzt, welches im Wesentlichen zylindrisch mit einer Wandung 31 ausgebildet ist, deren Außendurchmesser geringfügig kleiner ist als der Innendurchmesser der Wandung 21b des Aufnahmeelements 21. Das Lagergehäuse 30 weist an seiner der Öffnung 21c zugewandten Stirnseite eine Ausnehmung 32 auf, in welche die Achse 35 einsetzbar ist derart, dass das Rad 37 in dem Lagergehäuse 30 drehbar gelagert angeordnet ist. Die Drehung des Rads 37 erfolgt dabei um die Achse 35, welche insbesondere im Wesentlichen horizontal ausgerichtet ist, wenn das Befestigungsgehäuse 20 an dem Möbelstück angeordnet ist.

Das Lagergehäuse 30 ist in dem Aufnahmeelement 21 verschiebbar angeordnet, insbesondere zwischen einer ersten Position, in welcher die der Öffnung 21c abgewandte Stirnseite des Lagergehäuses 30 an dem Boden 21a des Aufnahmeelements 21 anschlägt, und einer zweiten Position, in welcher das Lagergehäuse 30 beispielsweise mit seiner der Öffnung 21c zugewandten Stirnseite oder mit einer an der Außenseite der Wandung 31 des Lagergehäuses 30 angeordneten Haltevorsprung 34 an einem auf der Innenseite der Wandung 21b angeordneten Haltevorsprung 23, welcher beispielsweise als umlaufende Sicke ausgebildet sein kann, anschlägt.

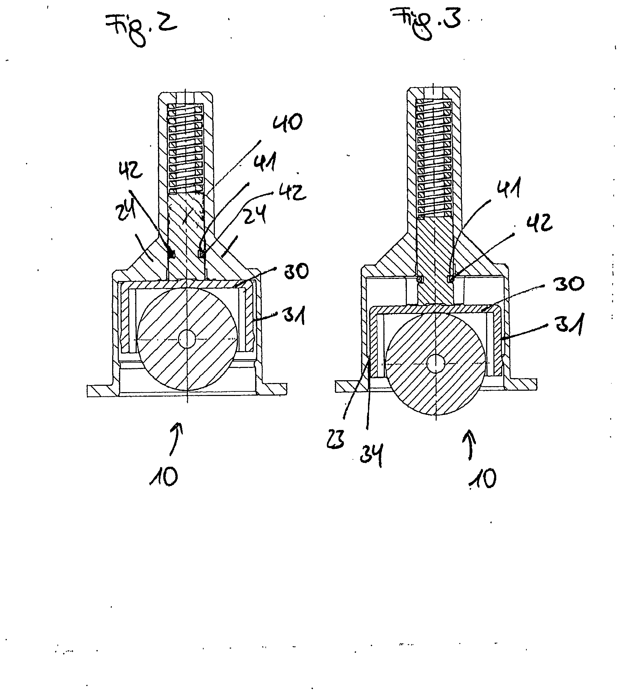

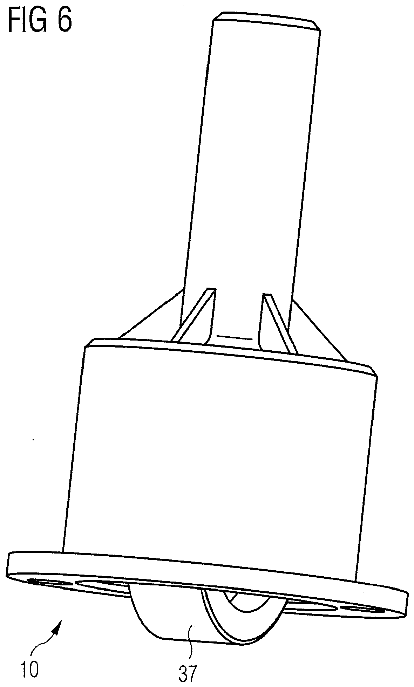

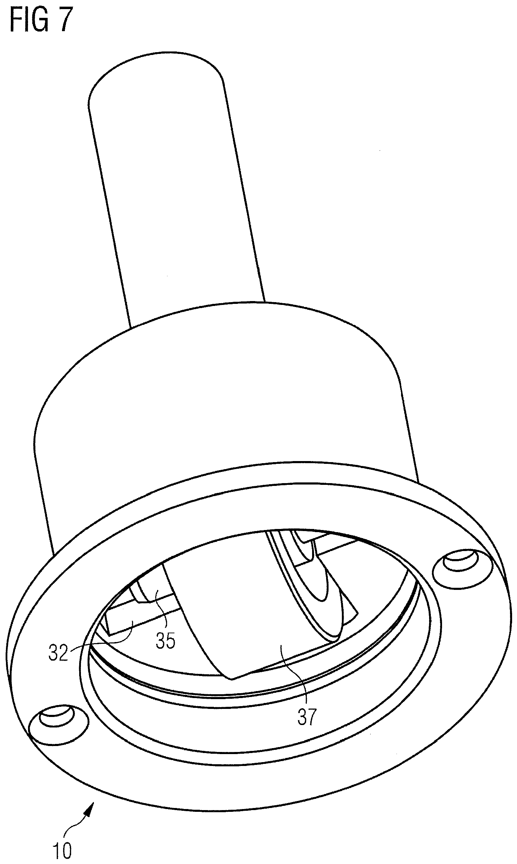

Die Achse 35 ist zwischen einer ersten Position (vgl. Fig. 2, 5 und 7) und einer zweiten Position (vgl. Fig. 3, 4 und 6) relativ zu dem Befestigungsgehäuse 20 verschiebbar angeordnet, wobei das auf der Achse 35 angeordnete Rad 37 in der ersten Position innerhalb des Befestigungsgehäuses 20, insbesondere innerhalb des Aufnahmeelements 21, angeordnet ist und in der zweiten Position abschnittsweise durch die Öffnung 21c aus dem Befestigungsgehäuse 20 herausragt. Eine derartige Verschiebung wird insbesondere dadurch erreicht, dass das Lagergehäuse 30 in dem Befestigungsgehäuse 20 verschiebbar angeordnet ist.

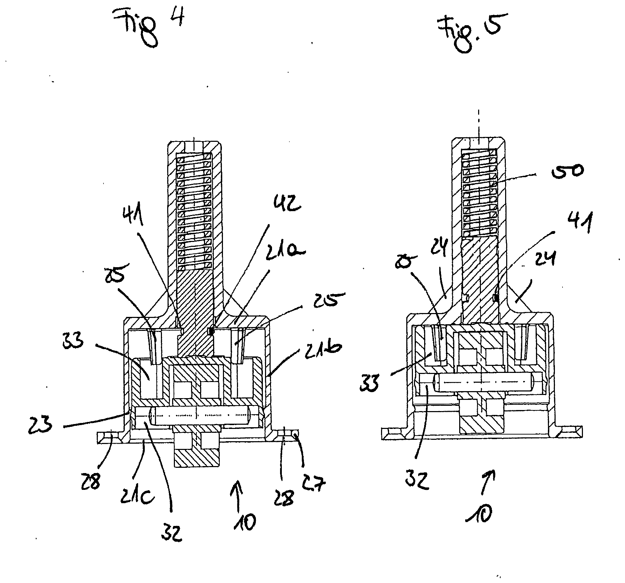

Eine Verdrehsicherung des Lagergehäuses 30 gegenüber dem Befestigungsgehäuse 20 um die Längsachse, entlang welcher die Verschiebung des Lagergehäuses 30 relativ zu dem Befestigungsgehäuse 20 erfolgt, kann beispielsweise dadurch erreicht werden, dass an einem von dem Lagergehäuse 30 und dem Befestigungsgehäuse 20, vorliegend beispielsweise an dem Befestigungsgehäuse 20, insbesondere an dem Boden 21a des Aufnahmeelements 21, ein Vorsprung 25 angeordnet ist, welcher in eine an dem anderen von Lagergehäuse 30 und Befestigungsgehäuse 20, vorliegend an dem Lagergehäuse 30, angeordnete Ausnehmung 33, welche insbesondere an der dem Boden 21a zugewandten Stirnseite des Lagergehäuses 30 ausgebildet ist, eingreift (vergleiche Figur 5).

Die Achse 35 mit dem Rad 37 ist mittels eines Federelements 50 beaufschlagt aus der ersten Position in die zweite Position überführbar und insbesondere in der zweiten Position vorgespannt, sodass eine Überführung aus der zweiten Position in die erste Position gegen die Kraft des Federelements 50 erfolgt. Das Federelement 50 ist dabei in einer sich an den Boden 21a des Aufnahmeelements 21 anschließenden Ausnehmung 22 in dem Befestigungsgehäuse 20 angeordnet. Die Ausnehmung 22 ist im Wesentlichen zylindrisch mit kleinerem Durchmesser als das Aufnahmeelement 21 ausgebildet. Auf der Außenseite des Bodens 21a und der Außenseite der die Ausnehmung 22 begrenzenden Wandung des Befestigungsgehäuses 20 können Verstärkungsrippen 24 angeordnet sein.

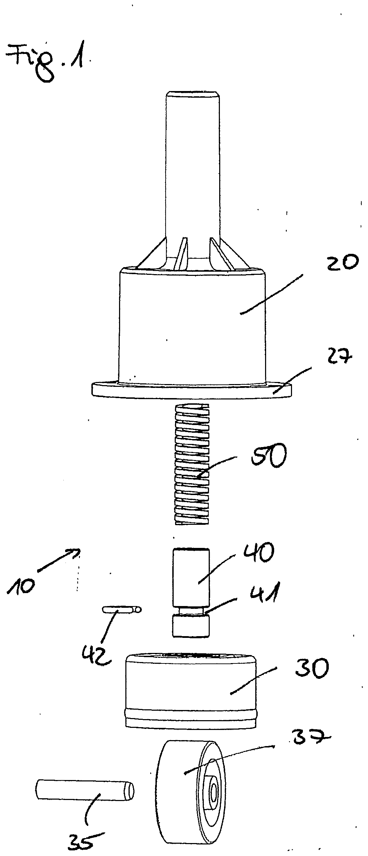

In die Ausnehmung 22 ist ein Führungselement 40 eingesetzt, welches zwischen dem Federelement 50 und der dem Boden 21a zugewandten Stirnseite des Lagergehäuses 30 anliegt. Das Führungselement 40 ist in der Ausnehmung 22 verschiebbar angeordnet. Das Führungselement 40 weist eine Nut 41 auf, in welcher ein Arretierungsring 42 angeordnet ist (vgl. insbesondere Fig. 1). In der ersten Position kommt die Nut 41 innerhalb der Ausnehmung 22 zu liegen (vergleiche Figuren 2 und 5). Wird das Lagergehäuse 30 und damit die Achse 35 mit dem Rad 37 durch die Kraft des Federelements 50 in die zweite Position überführt, gelangt die Nut 41 mit dem Arretierungsring 42 in einen Abschnitt des Befestigungsgehäuses 20 mit größerem Durchmesser, insbesondere in den Bereich des Aufnahmeelements 21, sodass der Arretierungsring 42 sich in seinem Durchmesser vergrößern kann und eine Rastvorrichtung derart bildet, dass ein Zurückführen des Lagergehäuses 30 in Richtung auf dem Boden 21a des Aufnahmeelements 21 und damit ein Überführen der Achse 35 mit dem Rad 37 aus der zweiten Position zurück in die erste Position verhindert wird, da der Arretierungsring 42 an der Kante der Ausnehmung 22 am Boden 21c der Aufnahmeelements 21 anschlägt (vergleiche Figuren 3 und 4). Die Kraft des Arretierungsrings 42 ist dabei insbesondere derart dimensioniert, dass ein Zurückführen des Rads 37 aus der zweiten Position in die erste Position auch dann nicht erfolgt, wenn das entsprechende Möbelstück mit seinem Gewicht das Befestigungsgehäuse 20 belastet. Dies ermöglicht ein Bewegen des Möbelstücks mit Hilfe des in die zweite Position überführten Rads 37. Wird das Befestigungsgehäuse 20 nicht nur durch die Gewichtskraft des Möbelstücks, sondern zusätzlich durch eine weitere Kraft belastet, ist der Arretierungsring 42 derart dimensioniert, dass die Rastvorrichtung dadurch gelöst werden kann und dies eine Überführung des Rads 37 aus der zweiten Position in die erste Position ermöglicht.

Da die Ebene, in welcher die Öffnung 21c angeordnet ist, an der Bodenfläche anliegt, wenn das Rad 37 in der ersten Position angeordnet ist, ist bei abgestelltem Möbelstück kaum zu erkennen, dass an der Unterseite eine Möbelrolle 10 angeordnet ist.

Die Möbelrolle 10 kann folgendermaßen zum Einsatz kommen:
Die Möbelrolle 10 ist an der Unterseite eines Möbelstücks befestigt. Als Ausgangspunkt wird angenommen, dass das Möbelstück an einer bestimmten Position steht und das Rad 37 in der ersten Position angeordnet ist, somit von außen nicht oder nur kaum sichtbar ist. Soll das Möbelstück bewegt werden, wird es zunächst leicht angehoben. Dadurch wird das Befestigungsgehäuse 20 entlastet und das Lagergehäuse 30 einschließlich des Rads 37 durch das Federelement 50 belastet aus der ersten Position in die zweite Position überführt. In der zweiten Position wird die Achse 35 und damit das Rad 37 mittels einer Rastvorrichtung, welche insbesondere durch den Arretierungsring 42 gebildet ist, fixiert, da insbesondere der Arretierungsring 42 in der zweiten Position außerhalb der Ausnehmung 22 angeordnet ist und sich geringfügig ausweiten kann, sodass ein Zurückführen des Lagergehäuses 30 mit der Achse 35 und dem Rad 37 verhindert wird. Die Kraft des Arretierungsrings ist dabei in Abhängigkeit von der Gewichtskraft des Möbelstücks derart dimensioniert, dass auch bei Absenken des Möbelstücks auf das Rad 37 die Rastvorrichtung noch nicht gelöst wird und das Möbelstück auf dem Rad 37 von einer Position in eine andere Position gerollt werden kann. Erst wenn das Möbelstück an der gewünschten Stelle positioniert ist, wird seitens einer Person zusätzlich zu der Gewichtskraft des Möbelstücks eine zusätzliche Kraft ausgeübt, welche den Rastmechanismus löst und ein Überführen des Rads 37 aus der zweiten Position in die erste Position ermöglicht. Die zusätzliche Kraft kann beispielsweise durch einen Benutzer ausgeübt werden.

Erfindungsgemäß kann die Möbelrolle 10 insbesondere an einem ausziehbaren Tisch als Tischauszugsrolle zum Einsatz kommen. Der ausziehbare Tisch weist zwei gegeneinander verschiebbare Elemente auf, wobei an jedem der Elemente mindestens ein Tischbein, beispielsweise jeweils zwei Tischbeine angeordnet sind. Um einen Tisch auszuziehen, d. h. in seiner Länge zu verlängern, werden die beiden Teilelemente auseinandergezogen und in die entstehende Lücke ein zusätzliches Tischplattenteil eingelegt. Um das Auseinanderziehen der beiden Teilelemente bei schweren Tischen zu vereinfachen, können an den Beinen eines der Elemente eine Möbelrolle 10, beispielsweise an den zwei Beinen jeweils eine Möbelrolle 10, angeordnet werden. Die Möbelrolle 10 ist dabei in die Standfläche der Tischbeine eingelassen und, wenn das Rad 37 in der ersten Position angeordnet ist, somit von außen nicht oder kaum erkennbar. Soll der Tisch ausgezogen werden, wird das eine Tischende leicht angehoben, wodurch das Befestigungsgehäuse 20 der Möbelrolle 10 entlastet und das Rad 37 durch das Federelement 50 belastet aus der ersten Position in die zweite Position überführt wird. Wird das Tischende wieder abgesenkt, wird die Achse 35 des Rads 37 in der zweiten Position mittels einer Rastvorrichtung fixiert, welche derart dimensioniert ist, dass die Rastvorrichtung auch bei Belastung durch die Gewichtskraft des Tisches nicht gelöst wird, sodass das Teilelement des Tisches auf den Rädern 37 auf einfache Art und Weise ausgezogen werden kann. Wurde die gewünschte Länge des Tisches erreicht, kann durch eine zusätzliche Kraft, beispielsweise durch Drücken auf die Tischplatte durch den Benutzer, die Rastvorrichtung wieder gelöst werden und die Räder 37 aus der zweiten Position in die erste Position rückgeführt werden.

### Bezugszeichenliste

- 10: Möbelrolle

- 20: Befestigungsgehäuse
- 21: Aufnahmeelement
- 21a: Boden
- 21b: Wandung
- 21c: Öffnung
- 22: Ausnehmung
- 23: Haltevorsprung
- 24: Rippe
- 25: Vorsprung
- 27: Bund
- 28: Loch

- 30: Lagergehäuse
- 31: Wandung
- 32: Ausnehmung
- 33: Ausnehmung
- 34: Haltevorsprung
- 35: Achse
- 37: Rad

- 40: Führungselement
- 41: Nut
- 42: Arretierungsring

- 50: Federelement

## Patentansprüche

1. Möbelrolle (10) mit einem Befestigungsgehäuse (20) zur Befestigung an der Unterseite eines Möbelstücks und einem auf einer Achse drehbar gelagerten Rad (37), wobei die Achse (35) zwischen einer ersten und einer zweiten Position relativ zu dem Befestigungsgehäuse (20) verschiebbar angeordnet ist, wobei das Rad (37) in der ersten Position vollständig innerhalb des Befestigungsgehäuses (20) mit einem Boden (21a), einer im wesentlichen zylindrischen Wandung (21b) sowie einer dem Boden (21a) gegenüberliegenden Offnung (21c) angeordnet ist und in der zweiten Position abschnittsweise durch die Öffnung (21c) aus dem Befestigungsgehäuse (20) herausragt, wobei die Achse (35) mittels eines Federelements (50) beaufschlagt aus der ersten Position in die zweite Position überführbar ist, wobei die Achse (35) in der zweiten Position mittels einer Rastvorrichtung fixierbar ist, **dadurch gekennzeichnet, dass** die Rastvorrichtung einen Arretierungsring (42) aufweist.

2. Möbelrolle (10) nach einem der vorhergehenden Ansprüche,
**dadurch gekennzeichnet, dass** die Kraft des Federelements (50) in Abhängigkeit von der Gewichtskraft des Möbelstücks derart dimensioniert werden kann,
dass die Achse (35), wenn sie in der ersten Position angeordnet ist, bei Belastung durch das Möbelstück in der ersten Position verbleibt.

3. Möbelrolle (10) nach einem der vorhergehenden Ansprüche,
**dadurch gekennzeichnet, dass** die Kraft des Federelements (50) in Abhängigkeit von der Gewichtskraft des Möbelstücks derart dimensioniert werden kann,
dass die Achse (35) bei Entlastung aus der ersten Position in die zweite Position überführt wird.

4. Möbelrolle (10) nach einem der vorhergehenden Ansprüche,
**dadurch gekennzeichnet, dass** die Rastvorrichtung derart ausgebildet ist, dass die Achse (35), wenn sie in der zweiten Position angeordnet ist, sowohl bei unbelastetem Befestigungsgehäuse (20) als auch bei durch das Möbelstück belastetem Befestigungsgehäuse (20) in der zweiten Position gehalten ist.

5. Möbelrolle (10) nach einem der vorhergehenden Ansprüche,
**dadurch gekennzeichnet, dass** die Rastvorrichtung derart ausgebildet ist, dass sie bei Belastung des Befestigungsgehäuses (20) durch die Gewichtskraft des Möbelstücks und eine zusätzliche Kraft lösbar ist.

6. Möbelrolle (10) nach einem der vorhergehenden Ansprüche,
**dadurch gekennzeichnet, dass** der Arretierungsring (42) in Abhängigkeit von der Gewichtskraft des Möbelstücks derart dimensioniert ist, dass die Achse (35), wenn sie in der zweiten Position angeordnet ist, sowohl bei unbelastetem Befestigungsgehäuse (20) als auch bei durch das Möbelstück belastetem Befestigungsgehäuse (20) in der zweiten Position gehalten ist und die Achse (35) bei Belastung des Befestigungsgehäuses (20) durch die Gewichtskraft des Möbelstücks und eine zusätzliche Kraft aus der zweiten Position in die erste Position überführbar ist.

7. Möbelrolle (10) nach einem der vorhergehenden Ansprüche,
**dadurch gekennzeichnet, dass** das Federelement (50) als Schraubenfeder ausgebildet ist.

8. Möbelrolle (10) nach einem der vorhergehenden Ansprüche, **dadurch gekennzeichnet, dass** die Achse (35) in einem Lagergehäuse (30) gelagert ist und das Lagergehäuse (30) in dem Befestigungsgehäuse (20) zwischen zwei Positionen verstellbar angeordnet ist.

9. Möbelrolle (10) nach Anspruch 8,
**dadurch gekennzeichnet, dass** an dem Lagergehäuse (30) ein Führungselement (40) angeordnet ist, welches in eine Ausnehmung (22) des Befestigungsgehäuses (20) eingreift und in dieser verschiebbar angeordnet ist.

10. Möbelrolle (10) nach einem Anspuch 9,
**dadurch gekennzeichnet, dass** das Führungselement (40) eine Nut (41) aufweist, in welcher der Arretierungsring (42) angeordnet ist.

11. Möbelrolle (10) nach Anspruch 9,
**dadurch gekennzeichnet, dass** die Ausnehmung (22) eine Nut aufweist.

12. Möbelrolle (10) nach einem der vorhergehenden Ansprüche, **dadurch gekennzeichnet, dass** das Befestigungsgehäuse (20) auf seiner Innenseite einen Haltevorsprung (34) oder eine Haltekante aufweist.

13. Möbelrolle (10) Anspruch 8,
**dadurch gekennzeichnet, dass** eine Verdrehsicherung (33) zwischen dem Lagergehäuse (30) und dem Befestigungsgehäuse (20) angeordnet ist.

14. Möbelrolle (10) nach Anspruch 13,
**dadurch gekennzeichnet, dass** die Verdrehsicherung (33) als an einem von Lagergehäuse (30) und Befestigungsgehäuse (20) angeordneter Vorsprung (25) ausgebildet ist, welcher in eine an dem anderen von Lagergehäuse (30) und Befestigungsgehäuse (20) angeordnete Ausnehmung (32) eingreift.

15. Tisch mit zwei relativ zueinander verschiebbaren Teilelementen, wobei an wenigstens einem der Teilelemente wenigstens eine Möbelrolle (10) nach einem der vorhergehenden Ansprüche angeordnet ist.

## Claims

1. Furniture roller (10) with an attachment housing (20) for attaching onto the underside of a piece of furniture and with a wheel (37) rotatably mounted on an axis, wherein the axis (35) is arranged moveably between a first and a second position relative to the attachment housing (20), wherein the wheel (37), in the first position, is arranged completely within the attachment housing (20), with a base (21a), with an essentially cylindrical walling (211b), and with an opening (21c) disposed opposite the base (21a), and in the second position, protrudes, segment by segment and through the opening (21c), out of the attachment housing (20), wherein the axis (35) is loaded by means of a spring element (50) and can be transferred from the first position into the second position, wherein the axis (35) can be fixed in the second position by means of a locking device,
**characterized in that** the locking device comprises a locking ring (42).

2. Furniture roller (10) in accordance with the preceding claim,
**characterized in that** the force of the spring element (50) can be proportioned, in dependency on the weight force of the piece of furniture, such that the axis (35) is retained in the first position under the load of the piece of furniture.

3. Furniture roller (10) in accordance with any of the preceding claims,
**characterized in that** the force of the spring element (50) can be proportioned, in dependency on the weight force of the piece of furniture, such that the axis (35) is transferred from the first position into the second position when the load is removed.

4. Furniture roller (10) in accordance with any of the preceding claims,
**characterized in that** the locking device is implemented such that the axis (35), when arranged in the second position, is retained in the second position both when the attachment housing (20) is not loaded, as well as by means of the attachment housing (20) when it is loaded by the piece of furniture.

5. Furniture roller (10) in accordance with any of the preceding claims,
**characterized in that** the locking device is implemented such that it can be released, when the attachment housing (20) is loaded, by means of the weight force of the piece of furniture and an additional force.

6. Furniture roller (10) in accordance with any of the preceding claims,
**characterized in that** the locking ring (42) is dimensioned such that, in dependency on the weight force of the piece of furniture, the axis (35), when in the second position, is retained in the second position both when the attachment housing (20) is not loaded, as well as by means of the attachment housing (20) when loaded by the piece of furniture, and **in that** the axis (35), when the attachment housing (20) is loaded, can be transferred from the second position into the first position by the weight force of the piece of furniture and by means of an additional force.

7. Furniture roller (10) in accordance with any of the preceding claims,
**characterized in that** the spring element (50) is implemented as a coil spring.

8. Furniture roller (10) in accordance with any of the preceding claims,
**characterized in that** the axis (35) is mounted in a bearing housing (30), and **in that** the bearing housing (30) is arranged adjustably between two positions in the attachment housing (20).

9. Furniture roller (10) in accordance with claim 8,
**characterized in that** a guide element (40) is arranged on the bearing housing (30) which engages with a recess (22) of the attachment housing (20) and **in that** it is moveably arranged therein.

10. Furniture roller (10) in accordance with claim 9,
**characterized in that** the guide element (40) comprises a slot (41) in which the locking ring (42) is arranged.

11. Furniture roller (10) in accordance with claim 9,
**characterized in that** the recess (22) comprises a slot.

12. Furniture roller (10) in accordance with any of the preceding claims,
**characterized in that** the attachment housing (20) comprises, on its inner side, a retaining projection (34) or a retaining edge.

13. Furniture roller (10) in accordance with claim 8,
**characterized in that** an anti-twist safeguard (33) is arranged between the bearing housing (30) and the attachment housing (20).

14. Furniture roller (10) in accordance with claim 13,
**characterized in that** the anti-twist safeguard (33) is implemented as a protrusion (25) arranged at one of the bearing housing (30) and the attachment housing (20), which engages with the recess (32), arranged at the other of the bearing housing (30) and the attachment housing (20).

15. Table with two sub-elements which are moveable relative to each other, wherein at least one furniture roller (10) in accordance with any of the preceding claims, is arranged on at least one of the sub-elements.

## Revendications

1. Roulette de meuble (10) comportant un boîtier de fixation (20) pour être fixé au-dessous d'un meuble et une roulette (37) tournant autour d'un axe,
- l'axe (35) pouvant coulisser entre une première et une seconde positions par rapport au boîtier de fixation (20),
- la roulette (37), dans sa première position, étant complètement rentrée dans le boîtier de fixation (20) ayant un fond (21a), une paroi essentiellement cylindrique (21b) ainsi qu'une ouverture (21c) en face du fond (21a), et dans sa seconde position, la roulette dépasse partiellement de l'ouverture (21c) du boîtier de fixation (20),
- l'axe (35) étant sollicité par un élément de ressort (50) pour passer de la première position à la seconde position,
- l'axe (35) étant fixé dans la seconde position par un dispositif d'arrêt, roulette **caractérisée en ce que**
le dispositif d'arrêt comporte une bague d'arrêt (42).

2. Roulette de meuble (10) selon la revendication 1,
**caractérisée en ce que**
la force de l'élément de ressort (50) est dimensionnée en fonction du poids du meuble de façon que l'axe (35) lorsqu'il est dans sa première position, reste dans cette première position sous l'effet du poids exercé par le meuble.

3. Roulette de meuble (10) selon l'une des revendications précédentes,
**caractérisée en ce que**
la force de l'élément de ressort (50) est dimensionnée en fonction du poids du meuble pour que l'axe (35) passe de sa première position à sa seconde position lors de la suppression de la charge,

4. Roulette de meuble (10) selon l'une des revendications précédentes,
**caractérisée en ce que**
le dispositif d'arrêt est réalisé pour que l'axe (35) lorsqu'elle est dans la seconde position, à la fois lorsque le boîtier de fixation (20) n'est pas sollicité et aussi lorsque le boîtier de fixation (20) est chargé par le meuble.

5. Roulette de meuble (10) selon l'une des revendications précédentes,
**caractérisée en ce que**
le dispositif d'arrêt est réalisé de façon à pouvoir être libéré lorsqu'il est chargé par le boîtier de fixation (20) par le poids du meuble et par une force supplémentaire.

6. Roulette de meuble (10) selon l'une des revendications précédentes,
**caractérisée en ce que**
la bague d'arrêt (42) est dimensionnée en fonction du poids du meuble de façon que :
- l'axe (35) soit tenu dans la seconde position lorsqu'il est dans la seconde position, à la fois lorsque le boîtier de fixation (20) n'est pas sollicité ou que le boîtier de fixation (20) est chargé par le meuble, et
- que l'axe (35), sollicité par le boîtier de fixation (20), par le poids du meuble et par une force supplémentaire, puisse passer de la seconde position à la première position.

7. Roulette de meuble (10) selon l'une des revendications précédentes,
**caractérisée en ce que**
l'élément de ressort (50) est un ressort hélicoïdal.

8. Roulette de meuble (10) selon l'une des revendications précédentes,
**caractérisée en ce que**
l'axe (35) est logé dans un boîtier de palier (30) et ce boîtier de palier (30) est monté réglable entre les deux positions dans le boîtier de fixation (20).

9. Roulette de meuble (10) selon la revendication 8,
**caractérisée en ce que**
le boîtier de palier (30) comporte un élément de guidage (40) qui pénètre dans un évidement (22) du boîtier de fixation (20) et coulisse dans celui-ci.

10. Roulette de meuble (10) selon la revendication 9,
**caractérisée en ce que**
l'élément de guidage (40) comporte une rainure (41) recevant la bague d'arrêt (42).

11. Roulette de meuble (10) selon la revendication 9,
**caractérisée en ce que**
l'évidement (22) comporte une rainure.

12. Roulette de meuble (10) selon l'une des revendications précédentes,
**caractérisée en ce que**
sur son côté intérieur le boîtier de fixation (20) comporte un relief de retenue (34) ou une arête de retenue.

13. Roulette de meuble (10) selon la revendication 8,
**caractérisée par**
un blocage de pivotement (33) entre le boîtier de palier (30) et le boîtier de fixation (20).

14. Roulette de meuble (10) selon la revendication 13,
**caractérisée en ce que**
le blocage de pivotement (33) est réalisé par un relief (25) du boîtier de palier (30) ou du boîtier de fixation (20), ce relief pénétrant dans un évidement (32) réalisé dans le boîtier de palier (30) ou le boîtier de fixation (20).

15. Table comportant deux éléments partiels coulissant l'un par rapport à l'autre, au moins l'un des éléments partiels comportant une roulette de meuble (10) selon l'une des revendications précédentes.
